# EUROPEAN PATENT APPLICATION

(11) **EP 2 134 098 A1**
(43) Date of publication of application: **16.12.2009**
(21) Application number: 07740142.0
(22) Date of filing: 28.03.2007
(51) Int. Cl.: H04N 7/32, H04N 7/01

(54) **IMAGE PROCESSING APPARATUS, IMAGE PROCESSING METHOD, IMAGE PROCESSING PROGRAM, AND RECORDING MEDIUM**

(71) Applicant: Pioneer Corporation, Tokyo 153-8654 (JP)
(72) Inventor: TANAKA, Yoshitaka, Tsurugashima-shi Saitama 350-2288 (JP); MITO, Kenji, Tsurugashima-shi Saitama 350-2288 (JP)
(74) Representative: Haley, Stephen
(86) International application number: PCT/JP2007/056704
(87) International publication number: WO 2008/120330

(57) **Abstract**

An image processing apparatus that causes video to be displayed using consecutive image frames and syntax elements of each image frame (100) includes an extracting unit that refers to a motion vector included in a syntax element and extracts from among macroblocks partitioned in a frame, a macroblock (501) having a motion vector that is identical to motion vectors of adjacent blocks of a given number or more; a determining unit that according to information included in the syntax element of the extracted macroblock (501), determines reliability of the motion vector of the block; an adopting unit that regards the macroblock (501) as a block of focus when the reliability of the motion vector is determined to be high and adopts the motion vector of the macroblock (501) as a motion vector to be used for interpolation frame generation.

## Description

### TECHNICAL FIELD

The present invention relates to an image processing apparatus, image processing method, image processing program, and recording medium that playback video using images formed by a sequence of frames and syntax elements for each frame. However, application of the present invention is not limited to the image processing apparatus, image processing method, image processing program, and recording medium above.

### BACKGROUND ART

Accompanying recent advancements in communication networks, various types of data are delivered via networks. In the delivery of data, the manner in which video of a large data volume is compressed at the time of coding is particularly important for smooth data delivery. Image compression schemes include, for example, discrete cosine transform (DCT), interframe prediction, motion compensation (MC), entropy coding, etc.

Further, for apparatuses that receive video compressed by such schemes, technology has been developed to reproduce high quality video using the compressed video received.
For example, a receiving apparatus having an interpolation frame generating function that further improves the precision of interpolation frame generation has been disclosed. The receiving apparatus includes a motion vector deriving unit and an interpolation frame generating unit to generate an interpolation frame for interpolating an image frame obtained by decoding an image signal that has been motion compensated and coded. The motion vector deriving unit acquires a motion compensation vector of a coded block constituting the coded image signal. The interpolation frame generating unit is a unit that generates an interpolation frame based on the motion vector of an image block constituting an image frame and uses the motion compensation vector of the coded block as the motion vector of the image block (see, for example, Patent Document 1 below).

Patent Document 1: Japanese Patent Application Laid-Open Publication No. 2005-6275

### DISCLOSURE OF INVENTION

### PROBLEM TO BE SOLVED BY THE INVENTION

However, even when a compressed image is efficiently delivered using such video compression technology, the image frame count per unit time at the time of reproduction of the video is preliminarily fixed. For example, although video compressed according to the H.264 standard (hereinafter, "H.264") is delivered from broadcast stations as terrestrial digital broadcasts, high vision broadcasts for fixed receiving devices, such as televisions, and one-segment (one-seg) broadcasts for mobile receiving devices, such as mobile telephones, have different image frame counts per second.

For high vision broadcasts, information is delivered at 30 image frames per second. Whereas, for one-seg broadcasts, information is delivered at 15 image frames per second. Thus, even when video compression is efficient, if the information delivered includes fewer image frames per unit time, as with one-seg broadcasts, the frame count of the video decreases, resulting in a problem in which a smooth video cannot be reproduced by the receiving device.

Further, as described above, according to the technology disclosed in Patent Document 1, an interpolation frame can be generated using delivered image frame information and thereby, even when the image frame count per unit time is low, the frame count of the video can be increased on the receiving side by generating interpolating frames as intermediate images between consecutive image frames.

However, with the technology disclosed in Patent Document 1, the generated interpolation frames are judged for suitability for interframe prediction and only image frames judged to be suitable are utilized as an interpolation frame. To make this judgment, complicated processing is required, such as referring to the number of image blocks for which the sum of DCT coefficients exceeds a threshold, the number of intrablocks, the degree of correlation of a reference image, etc. Thus, a problem arises in that the processing volume for generating interpolation frames becomes great as does the load on the receiving apparatus.

### MEANS FOR SOLVING PROBLEM

An image processing apparatus according to the invention of claim 1 causes video to be displayed using consecutive image frames and a syntax element of each frame and includes an extracting unit that refers to a motion vector included in a syntax element and extracts from among blocks partitioned in a frame, a block having a motion vector that is identical to motion vectors of adjacent blocks of a given number or more; a determining unit that according to information included in the syntax element of the block extracted by the extracting unit, determines reliability of the motion vector of the block; an adopting unit that regards the block as a block of focus when the reliability of the motion vector is determined to be high by the determining unit and adopts the motion vector of the block of focus as a motion vector to be used for interpolation frame generation.

An image processing apparatus according to the invention of claim 10 causes display of video using consecutive image frames and a syntax element of each frame and includes a selecting unit that select from among blocks partitioned in a frame and based on a syntax element, a block that satisfies a given criterion; an extracting unit that refers to a motion vector included in the syntax element and extracts from among blocks selected by the selecting unit, a block having a motion vector that is identical to motion vectors of adjacent blocks of a given number or more; and an adopting unit that adopts, as a motion vector to be used for interpolation frame generation, the motion vector of the block extracted by the extracting unit.

An image processing method according to the invention of claim 11 causes video to be displayed using consecutive image frames and a syntax element of each frame, and includes an extracting step of referring to a motion vector included in a syntax element and extracting from among blocks partitioned in a frame, a block having a motion vector that is identical to motion vectors of adjacent blocks of a given number or more; a determining step of determining, according to information included in the syntax element of the block extracted at the extracting step, reliability of the motion vector of the block; an adopting step of regarding the block as a block of focus when the reliability of the motion vector is determined to be high at the determining step and adopting the motion vector of the block of focus as a motion vector to be used for interpolation frame generation.

An image processing method according to the invention of claim 12 causes video to be displayed using consecutive image frames and a syntax element of each frame, and includes a selecting step of selecting from among blocks partitioned in a frame and based on a syntax element, a block that satisfies a given criterion; an extracting step of referring to a motion vector included in the syntax element and extracting from among blocks selected at the selecting step, a block having a motion vector that is identical to motion vectors of adjacent blocks of a given number or more; and an adopting step of adopting, as a motion vector to be used for interpolation frame generation, the motion vector of the block extracted at the extracting step.

An image processing program according to the invention of claim 13 causes a computer to execute the image processing method according to claim 11 or 12.

A computer-readable recording medium according to the invention of claim 14 stores therein the image processing program according to claim 13.

### BRIEF DESCRIPTION OF DRAWINGS

Fig. 1 is a schematic of an image frame;
Fig. 2 is a schematic depicting macroblock sizes;
Fig. 3 is a schematic of an example of motion vectors set for macroblocks;
Fig. 4 is a block diagram of a functional configuration of an image processing apparatus according to an embodiment;
Fig. 5 is a schematic of macroblock extraction and selection processing;
Fig. 6 is a flowchart of processing executed by the image processing apparatus according to the present embodiment;
Fig. 7 is a block diagram of a mobile terminal apparatus;
Fig. 8 is a block diagram detailing the configuration of an interpolation frame generating unit;
Fig. 9 is a flowchart of frame interpolation processing;
Fig. 10 is a flowchart of block selection processing by an adopted-block selecting unit; and
Fig. 11 is a schematic of one example of conditions for selecting a macroblock according to bit rate.

### EXPLANATIONS OF LETTERS OR NUMERALS

- 100: image frame
- 101: macroblock
- 400: image processing apparatus
- 401: extracting unit
- 402: determining unit
- 403: adopting unit
- 404: selecting unit
- 405: detecting unit

### BEST MODE(S) FOR CARRYING OUT THE INVENTION

With reference to the accompanying drawings, preferred embodiments of an image processing apparatus, an image processing method, an image processing program, and recording medium according to the present invention will be described.

### (Overview of H.264 Coding Standard)

The image processing apparatus according to the present embodiment handles video data compressed according to H.264, the international standard for video coding technology. H.264 is a video compression standard established by the Video Coding Experts Group (VCEG) of the International Telecommunication Union, Telecommunication Standardization Sector (ITU-I). H.264 is distinguished by image compression performed utilizing spatial transformation, interframe prediction, quantization, and entropy coding. Under H.264, numerous improvements are provided for with respect to various image compression schemes like those described above, and H.264 includes the addition of tools such as arithmetic coding and filters. Further, variegated modes are appropriately used according to image characteristics and thus, better compression efficiency is achieve as compared to predecessor coding schemes like MPEG-1, MPEG-2, H.263, and MPEG-4.

The image processing apparatus according to the present embodiment improves video quality by utilizing, in particular, interframe prediction among the image compression technologies described above. In general, video is a sequential reproduction of consecutive frame images to display a moving image. Interframe prediction is a technique of generating prediction images based on an image that differs in time from consecutive image frames, and coding difference (residual) images of input images and the prediction images.

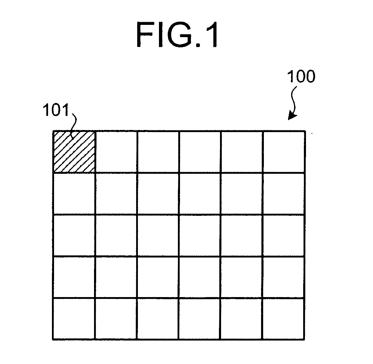

Fig. 1 is a schematic of an image frame. As depicted in Fig. 1, one image frame 100 is partitioned into multiple areas, respectively referred to as a macroblock 101. When frame interpolation of the consecutive image frames, motion compensation, etc. is executed, processing is executed with respect to each of the macroblocks 101.

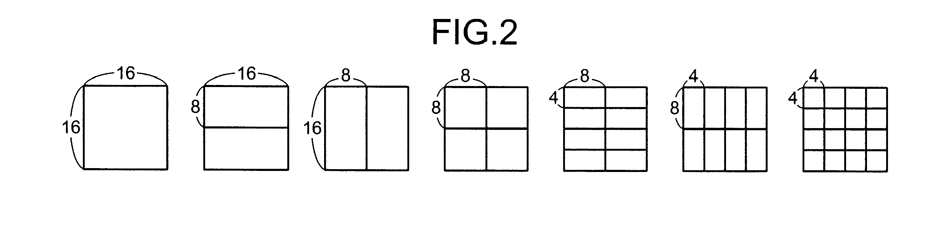

H.264, includes a specification for variable macroblock size. Fig. 2 is a schematic depicting macroblock sizes. As depicted in Fig. 2, under H.264, the following seven sizes are set based on a 16x16 pixel macroblock.

·16×16 pixels (maximum block size)
·16×8 pixels
·8×16 pixels
·8×8 pixels
·8×4 pixels
·4×8 pixels
·4×4 pixels (minimum block size) (horizontally×vertically)

The macroblocks 101 include macroblock-type information indicating the size of the macroblocks. Further, under H.264, syntax elements are set for each macroblock 102. Here, syntax is regarded as rules for compressed and coded video data strings. Specifically, for example, header information, motion vectors, conversion coefficients, etc. are set as syntax elements.

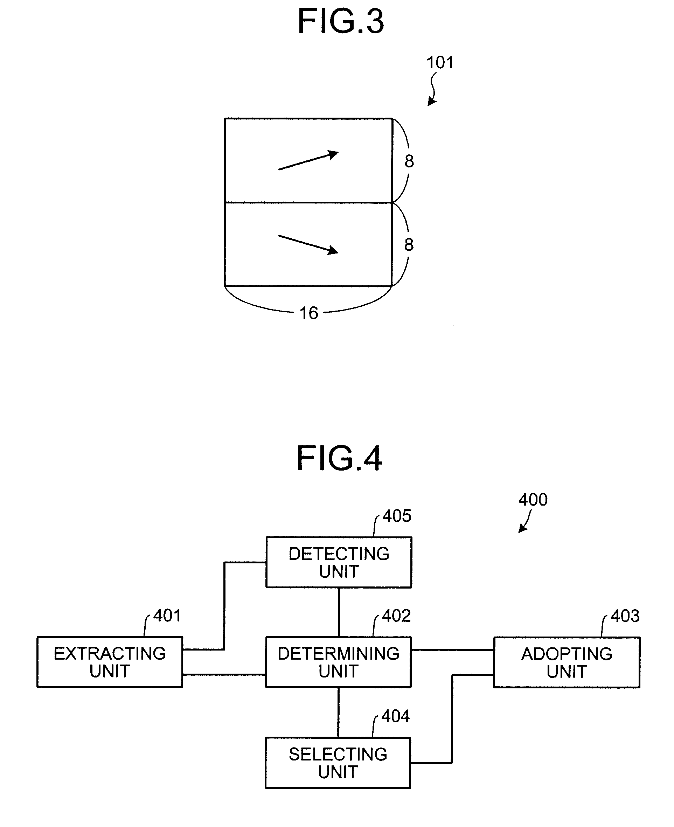

Fig. 3 is a schematic of an example of motion vectors set for macroblocks. As described, according to H.264, syntax elements are set for each macroblock 102. Thus, if the size of a macroblock 101 is 8x16 pixels as depicted in Fig. 3, motion vectors are set as syntax elements for each macroblock.

Syntax elements set in the macroblocks 101 are not identical and may vary according to block. In this case, macroblocks 101 of various types are generated according to the kind of information set as a syntax element of the macroblock. Specifically, among various types of macroblocks 101 are blocks in which a motion vector is set (hereinafter, "motion vector block"), intrablocks that do not include a motion vector and in which only a difference value (hereinafter, "residual component") with respect to one of the consecutive image frames is set, a skip macroblock that does not include information indicating correlation with the consecutive image frames, such as a motion vector, difference value, etc.

A motion vector block, using a motion vector, generates an interpolation frame of a corresponding macroblock. An intrablock, using only a residual component or from adjacent blocks, estimates motion to generate an interpolation frame of a corresponding macroblock. A skip block estimates motion from a motion vector set in an adjacent block to generate an interpolation frame of a corresponding macroblock.

Here, attention must be paid to the motion vector set in the motion vector block. This motion vector is a vector that indicates motion in the consecutive image frames; however, to reduce the bit rate of the video data, a vector different from the actual motion vector may be set.

Thus, according to the present embodiment, among motion vector blocks, only macroblocks having vectors that correctly indicate motion in the consecutive image frames are selected and the vectors set in the selected macroblocks are used to generate interpolation frames.

### (Function Configuration of Image Processing Apparatus)

A functional configuration of the image processing apparatus according to the embodiment of the present invention will be described. Fig. 4 is a block diagram of a functional configuration of the image processing apparatus according to the present embodiment. According to the present embodiment, an image processing apparatus 400 acquires video data coded according to H.264 and generates consecutive image frames from information obtained by decoding the video data, thereby causing reproduction as video. Accordingly, as depicted in Fig. 4, the image processing apparatus 400 includes an extracting unit 401, a determining unit 402, an adopting unit 403, a selecting unit 404, and a detecting unit 405.

The image processing apparatus 400 acquires video data compressed according to H.264 (compressed video data) and executes processing to generate images for reproduction. The image processing apparatus 400 may acquire the compressed video data by downloading the data delivered through a communication network, by a broadcast signal, etc., or by reading the data from a magnetic disk or an optical disk using a drive.

The extracting unit 401, from among macroblocks partitioned in an image frame constituting the acquired video data, refers to motion vectors included in syntax elements and extracts a macroblock having a motion vector that is identical to the motion vectors of adjacent macroblocks of a given number or more. Among the blocks adjacent to the macroblock, the number of blocks having an identical motion vector and by which it is determined whether the macroblock is to be extracted may be appropriately set. For example, the macroblock may be extracted when the motion vectors of all adjacent blocks (above, below, to the left of, to the right of, and diagonal to the macroblock) are identical, or when among adjacent macroblocks, six of more motion vectors are identical.

The macroblock extracted by the extracting unit 401 is regarded as a block of focus. Extraction processing for the block of focus is preferably such that the image frame 100 is the smallest macroblock size (4x4 pixels). Thus, by executing extraction processing with respect to the smallest unit size, oversight of the block of focus can be prevented.

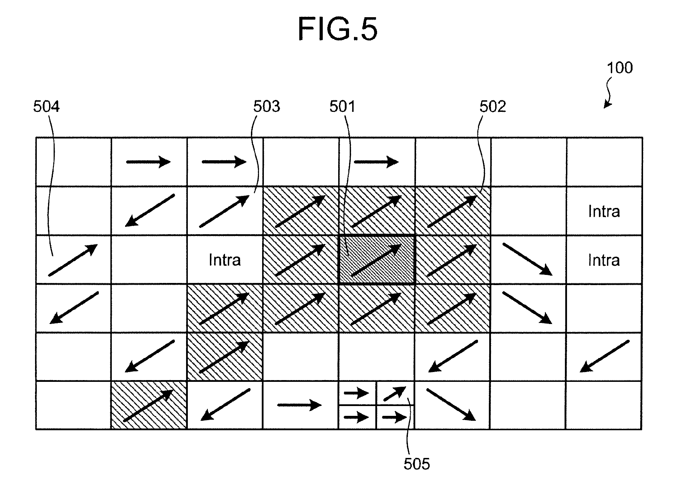

Fig. 5 is a schematic of macroblock extraction and selection processing. As depicted in Fig. 5, reference to the syntax elements reveals that an image frame 100 includes various blocks such as a motion vector block (arrow), intramacroblocks (Intra), skip macroblocks (blank), etc.

As described, the extracting unit 401 refers to motion vectors and extracts a macroblock having a motion vector that is identical to the motion vector of adjacent blocks of a given number or more. In the case of the image frame 100 depicted in Fig. 5, a macroblock 501 is extracted from among motion vector blocks that satisfy the above conditions. However, at the time of extraction by the extracting unit 401, it cannot be concluded whether the motion vector set in the macroblock correctly indicates motion in the image frame subsequent to the image frame 100. Therefore, processing to determine whether the motion vector set in the selected macroblock 501 correctly indicates the motion is executed.

The determining unit 402, according to information included in the syntax elements of the extracted macroblock 501, determines the reliability of the motion vector set in the macroblock 501. If the reliability of the motion vector is high, the motion vector set in the extracted macroblock 501 correctly indicates motion in the video data and can be used in the generation of a correction frame described hereinafter.

The determining unit 402, from among syntax elements included in the macroblock 501, uses information other than information related to the motion vector to determine the reliability of the motion vector. According to the present embodiment, the following four elements are used as determination criteria.

·size of macroblock type
·CBP value
·whether intrablock
·reference frame number

Accordingly, the determining unit 402 determines the reliability of the motion vector to be high if the macroblock type of a syntax element of the macroblock 501 is equal to or greater than a given size. The reasoning behind this condition is that with respect to 4x4 pixels, a relatively small macroblock deforms boundary portions of objects having different motions, people who are moving, etc. and thus, the motion vector set therein does not indicate motion correctly and consequently, the reliability thereof is low.

The determining unit 402 may determine the reliability of the motion vector to be high if the difference value with respect to a reference frame is not included in the macroblock 501 as a syntax element. In other words, the reliability of a macroblock that includes a residual component, which indicates the difference value with respect to a reference frame, is determined to be low. An intrablock, which does not include a motion vector and includes a residual component is also determined to have a low reliability and as a result, is excluded as a block of focus candidate.

In particular for H.264, whether a residual component is included is determined by the code block pattern (CBP) assigned to each 8x8 pixel macroblock. The bit of the CBP is raised if the 8x8 pixel macroblock includes a residual component.

Further, the determining unit 402 determines reliability to be high if an image frame in series with the image frame 100 and at most a given number of frames away from the image frame 100 is set in a reference frame as a syntax element of the macroblock 501. For example, when the second or the third image frame before the image frame 100 is set in a reference frame, the reliability of the motion vector is determined to be low. If a reference frame that is at most a given number of frames away is set as a syntax element of the macroblock 501, reliability is determined to be high.

Any of the described determination criteria may be set for the determining unit 402, selected determination criteria may be set, or all of the determination criteria may be set. The reliability of the motion vector set in a macroblock that satisfies such set determination criteria is determined to be high.

The adopting unit 403 regards the macroblock 501 for which the reliability of the motion vector has been determined to be high by the determining unit 402 as a block of focus and adopts the motion vector set in the block of focus as a motion vector for interpolation frame generation. An interpolation frame is an intermediate image of the image frames acquired from the video data. By generating interpolation frames between image frames acquired from the video data, the number of frames per unit time is doubled, thereby enabling smooth video reproduction even if the number of image frames in the video data is low.

As described, when a block of focus having a motion vector of a high reliability is set, other macroblocks having a motion vector that is identical to that of the block of focus are also regarded to have correct motion vectors and are used by the image processing apparatus 400 to generate interpolation frames.

The selecting unit 404, from among the macroblocks partitioned in the image frame 100, selects a macroblock having a motion vector identical to that of the block of focus. When a macroblock 502 (hatched blocks) is selected by the selecting unit 404, the adopting unit 403 adopts the motion vector set in the macroblock 502 as a motion vector for interpolation frame generation.

Selection processing at the selecting unit 404 may set various conditions based on motion vectors like those described above. For example, the selecting unit 404 may exclude from selection, a macroblock 505 that is smaller than a preliminarily set macroblock type because, as described in the explanation concerning criteria for determining the reliability of the motion vector of the macroblock 501, often boundary portions of objects having different motions, people who are moving, etc. are deformed.

Further, from among blocks having a motion vector identical to that of a block of focus (macroblock 501), the selecting unit 404 may select a given block where one or more blocks adjacent to the given block have a motion vector identical to that of the block of focus. The reasoning behind this is that even if the motion vector is identical to that of the block of focus 501, the reliability of the motion vector is low if the macroblock is surrounded by macroblocks having another motion vector. Thus, a motion vector block 504 of the image frame 100 depicted in Fig. 5 is excluded from selection despite having a motion vector identical to that of the block of focus 501.

Similar to the determination of reliability of the block of focus (macroblock 501), the selecting unit 404 may select a block that does not include, as a syntax element, a difference value with respect to a reference frame. According to this selection criterion, in the case of the image frame 100 depicted in Fig. 5, although a motion vector block 503 has a motion vector identical to that of macroblock 501, CBP of the motion vector block 503 does not equal zero and hence, is excluded from selection.

The described configuration is a basic configuration of the image processing apparatus according to the present embodiment. By a meticulous setting of determination criteria of the determining unit 402 and a meticulous setting of the contents of the selection process executed by the selecting unit 403, the image processing apparatus 400 enables motion vector blocks respectively having motion vectors that correctly indicate motion in consecutive image frames to be more accurately selected.

The image processing apparatus 100 according to the present embodiment is capable of selecting only macroblocks having correct motion vectors by an appropriate setting of selection criteria like those described. As described, extraction processing of the extracting unit 402, selection processing of the selecting unit 403, etc. are executed based on simple determination processing and hence, the processing load on the image processing apparatus 400 is low.

At the setting of criteria for determining the reliability of an extracted macroblock, the image processing apparatus 400 may refer to the bit rate of the acquired video data. Specifically, for example, as depicted in Fig. 4, a detecting unit 405 is provided that detects the bit rate at the time of acquisition of the video data of the image frame 100. According to the bit rate detected by the detecting unit 405, the determining unit 402 changes the criteria for determining the reliability of the motion vector of the macroblocks. Through the provision of the detecting unit 405, motion vectors having a high reliability can be automatically adopted according to the bit rate of the video data.

### (Processing Executed by Image Processing Apparatus)

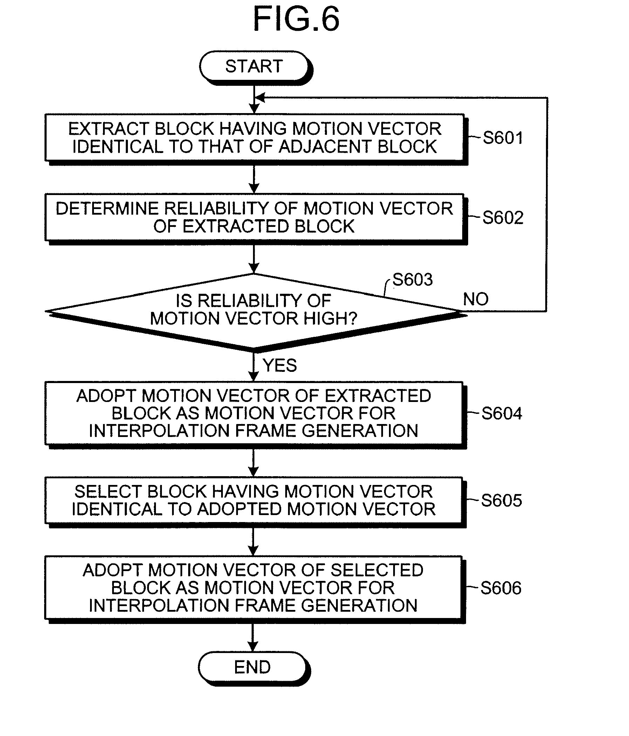

Processing executed by the image processing apparatus 400 will be described. Fig. 6 is a flowchart of processing executed by the image processing apparatus according to the present embodiment. As depicted in Fig. 6, the extracting unit extracts a block having a motion vector that is identical to that of an adjacent block (step S601).

The determining unit 402 determines the reliability of the motion vector set in the block extracted at step S601 (step S602). From the determination result at step S602, it is determined whether the reliability of the motion vector is high (step S603). To determine the reliability, the determining unit 402 refers to the size of the macroblock type, the CBP value, whether the block is an intrablock, the reference frame number, etc. as described above.

At step S603, if the reliability of the motion vector is not determined to be high (step S603: NO), the flow returns to the processing at step S601 and the extracting unit 401 extracts a new block. Conversely, if the reliability is determined to be high (step S603: YES), the motion vector of the block indicates the correct motion and hence, the adopting unit 403 adopts the motion vector of the extracted block as a motion vector for interpolation frame generation (step S604).

Subsequently, processing is executed to select from among the macroblocks of the image frame 100, blocks having motion vectors of a high reliability. The selecting unit 404 selects a block having a motion vector identical to the motion vector adopted at step S604 (step S605). The adopting unit 403 adopts, as a motion vector for interpolation frame generation, the motion vector of the block selected at step S605 (step S606), thereby ending a series of the processing. At step S605 when a block is selected, in addition to whether the motion vector is identical to that of a block of focus as described, other conditions (block size, conditions concerning adjacency with other blocks, etc.) may be added.

At step S601, when a macroblock satisfying the selection conditions set for the selecting unit 404 is selected, as depicted in Fig. 5 with respect to the image frame 100, the motion vector of the block of focus 501 and of the motion vector block 502 are adopted.

As another embodiment, the image processing apparatus 400 may adopt a motion vector according to a procedure different from that depicted in the flowchart of Fig. 6. According to this procedure, the selecting unit 404 selects from among blocks partitioned in the image frame 100, a block that satisfies given criteria based on syntax elements. The given criteria are the size of the macroblock type, the CBP value, whether the block is an intrablock, the reference frame number, etc., and if these criteria are satisfied, the reliability of the motion vector is determined to be high.

The extracting unit 401 refers to the motion vector included in a syntax element and extracts from among blocks selected according to the given criteria, a macroblock having a motion vector that is identical to the motion vectors of adjacent blocks of a given number or more. Here, the extracted block is the macroblock 501, i.e., the block of focus.

Similar to step S604 depicted in Fig. 6, the adopting unit 403 adopts, as a motion vector for interpolation frame generation, the motion vector of the macroblock extracted by the extracting unit 401. The adopting unit 403 may further adopt, from among the macroblocks selected by the selecting unit 404 and as a motion vector for interpolation frame generation, the motion vector of another macroblock having a motion vector identical to that of the block of focus (macroblock 501). In the flowchart depicted in Fig. 6, at step S605 when another macroblock is selected that has the same motion vector as the block of focus (macroblock 501), various selection criteria are set; however, according to the present embodiment, at the initial selection process by the selecting unit 404, since only macroblocks satisfying the above selection criteria are selected, here, the motion vector alone may be referred to in order to select a macroblock.

In this way, using only simple processing according to the embodiments, the image processing apparatus 400 is able to adopt appropriate motion vectors for generating interpolation frames. Thus, even if the number of image frames of video data is low, the number of frames per unit time can be increased enabling smooth video reproduction.

### [Example]

An example of the present invention will be described. In the present example, functions of the image processing apparatus 400 according to the embodiment are applied to a mobile terminal apparatus to reproduce smooth video even when a one-seg broadcast is received. A configuration of the mobile terminal apparatus will be described followed by specific processing details.

### (Mobile Terminal Apparatus Configuration)

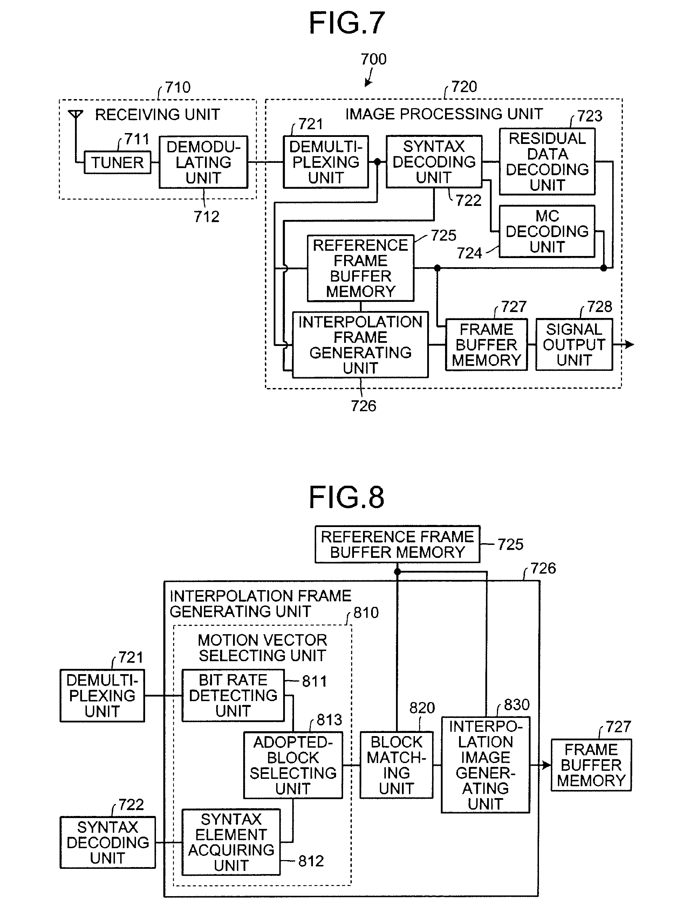

A configuration of the mobile terminal apparatus will be described. Fig. 7 is a block diagram of the mobile terminal apparatus. As depicted in Fig. 7, a mobile terminal apparatus 700 includes a receiving unit 710 and an image processing unit 720. The mobile terminal apparatus 700 may include a function of receiving analog broadcasts and digital broadcasts, a telephone function, and a network connecting function. However, here, explanation is with respect to reception of one-seg broadcasts of terrestrial digital broadcasts.

The receiving unit 710 receives one-seg broadcasts delivered from broadcast stations. In detail, the receiving unit 710 includes a tuner 711 and a demodulating unit 712 to demodulate the received digital broadcast signal into compressed video data that is output to the image processing unit 720.

The image processing unit 720 decodes the compressed video data input thereto from the receiving unit 710 and causes reproduction of the video. Actually, the image processing unit 720 is connected to a non-depicted display and through the output of a signal carrying consecutive image frames from the image processing unit 720 to the display, video is reproduced.

The image processing unit 720 includes a demultiplexing unit 721, a syntax decoding unit 722, a residual data decoding unit 723, an MC decoding unit 724, a reference frame buffer memory 725, an interpolation frame generating unit 726, a frame buffer memory 727, and a signal output unit 728.

The demultiplexing unit 721 demultiplexes the compressed video data input from the receiving unit 710 into syntax elements and video data. The syntax elements are output to the syntax decoding unit 722, while the video data is output to the reference frame buffer memory 725 and the interpolation frame generating unit 726.

The syntax decoding unit 722 decodes the syntax elements and according to the contents of the syntax elements, outputs the syntax elements to the residual data decoding unit 723, the MC decoding unit 724, and the interpolation frame generating unit 726. The residual data decoding unit 723 and the MC decoding unit 724 output decoded residual data, MC data, etc. to the frame buffer memory 727. The reference frame buffer memory 725 stores therein reference frames used for generation of an interpolation frame described hereinafter.

The interpolation frame generating unit 726 refers to syntax elements from the video data input from the demultiplexing unit 721 to reproduce interpolation frames. The frame buffer memory 727 stores therein as image frames in series with an image frame constituting the video data, interpolation frames generated by the interpolation frame generating unit 726. The signal output unit 728 functions as an interface with the display and sequentially outputs to the display, signals carrying the consecutive image frames stored in the frame buffer memory 727.

The mobile terminal apparatus 700 according to the example is characterized by interpolation frame generation processing by the interpolation frame generating unit 726 among the described components. Accordingly, the interpolation frame generating unit 726 will be explained.

### (Detailed Configuration of Interpolation Frame Generating Unit)

Fig. 8 is a block diagram detailing the configuration of the interpolation frame generating unit. As depicted in Fig. 8, the interpolation frame generating unit 726 includes a motion vector selecting unit 810, a block matching unit 820, and an interpolation image generating unit 830. First, the overall flow of the interpolation frame generating processing at the interpolation frame generating unit 726 will be explained.

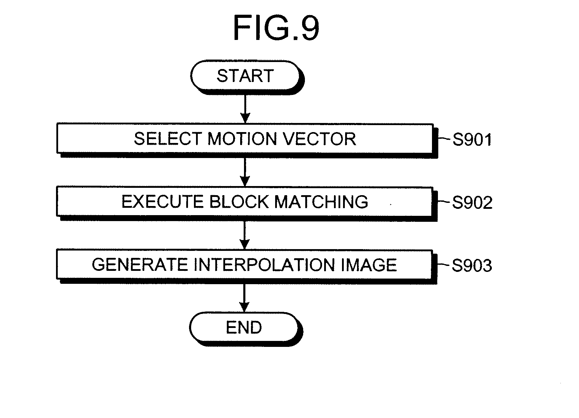

Fig. 9 is a flowchart of frame interpolation processing. As depicted in Fig. 9, the motion vector selecting unit 810 selects a motion vector to be used in the generation of an interpolation frame (step S901). The processing at step S901 will be explained in detail hereinafter.

The block matching unit 820 performs block matching with respect to each macroblock having the motion vector selected at step S901 (step S902). Block matching is processing for identifying, in a reference image frame, a position that corresponds to a block in the image frame under processing (current frame) to thereby correlate the current frame and the reference frame, based on reference positions.

Lastly, the interpolation image generating unit 830 generates an interpolation image from the current image frame and the reference frame that have been block matched (step S903), ending a series of the processing. Specifically, to generate an image indicating intermediate motion between the current image frame and the reference frame, a vector that is half the motion vector selected at step S901 is used from the reference position block matched at step S902. The generated image is an interpolation image (interpolation frame).

Processing by the motion vector selecting unit 810 will be explained. As depicted in Fig. 8, the motion vector selecting unit 810 includes a bit rate detecting unit 811, a syntax element acquiring unit 812, and an adopted-block selecting unit 813. The bit rate detecting unit 811 confirms, for each frame, the data volume of the video data received by the demultiplexing unit 721, and determines the bit rate. According to the bit rate, the selection conditions for the adopted-block selecting unit 813 are changed.

The syntax element acquiring unit 812 acquires syntax elements input from the syntax decoding unit 722, and extracts syntax elements at the macroblock layer and below. Specific examples include the macroblock type, the CBP, the reference frame number to be used, and motion vector data for an estimated vector (if this data is 0, it often indicates motion identical to that in adjacent blocks), coeff_token (if obtained when the CBP bit is 1, it is the target amount of residual components).

The adopted-block selecting unit 813, based on the information obtained by the bit rate detecting unit 811 and the syntax element acquiring unit 812, selects a motion vector having a high reliability and a macroblock having the motion vector, and outputs the result of the selection to the block matching unit 820.

### (Block Selection Processing)

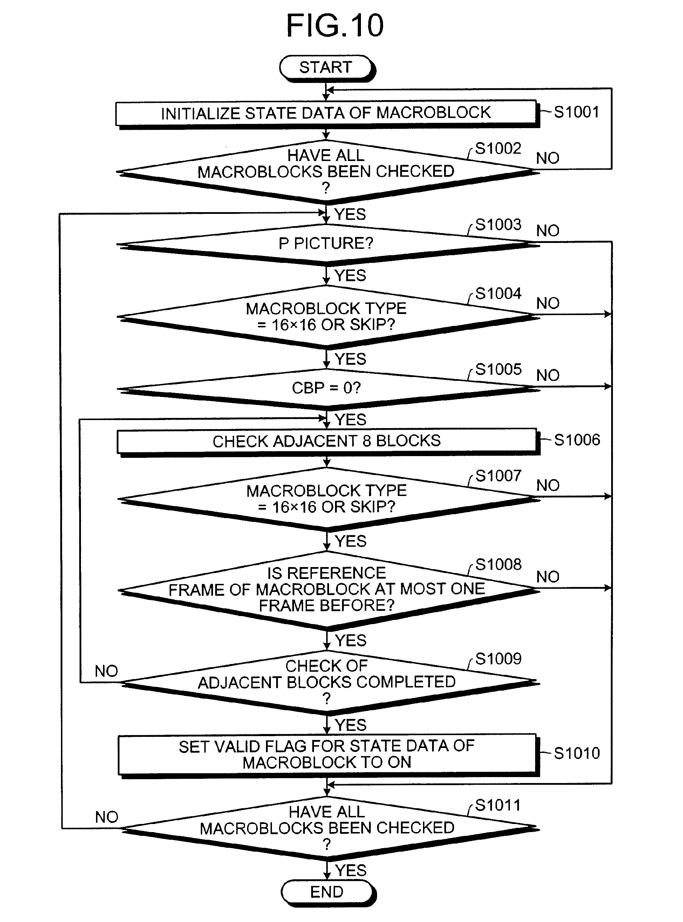

Block selection processing by the motion vector selecting unit 810 will be explained. Fig. 10 is a flowchart of block selection processing by the adopted-block selecting unit. The processing described herein is executed for each image frame. As depicted in Fig. 10, state data concerning all of the macroblocks in the frame are sequentially initialized (step S1001). State data indicates what kind of block a macroblock is, or whether the macroblock is a block adopting a motion vector.

It is determined whether all of the macroblocks of the image frame under processing have been checked (step S1002). Here, if a macroblock that has not yet been checked remains (step S1002: NO), the flow returns to the processing at step S1001, and the processing at steps S1001 to S1002 is repeated until the state data of all the macroblocks have been initialized.

At step S1002, if it is determined that all of the macroblocks have been checked (step S1002: YES), it is sequentially determined with respect to each of the macroblocks of the frame, whether the slice type is a P picture (step S1003).

At step S1003, if the slice type of the image frame under processing is a P picture (step S1003: YES), whether the macroblock type of the macroblock under check is 16x16 and whether the macroblock type is a skip block type is determined (step S1004). If the macroblock under check is 16x16 or a skip block type (step S1004: YES), whether CBP equals zero is determined (step S1005).

At step S1005, if CBP equals zero (step S1005: YES), then the conditions of the slice type of the frame under processing being a P picture, the macroblock under check being 16x16 or a skip block type, and the CBP equaling zero are satisfied (steps S1003, S1004, and S1005: YES). The flow moves to processing for extracting a block of focus from among macroblocks satisfying the above conditions.

If even one of the conditions are not satisfied at steps S1003 to S1005 (steps S1003, or S1104, or S1005: NO), the motion vector of the macroblock under check is not suitable for interpolation frame generation and thus, is not selected; and the flow proceeds to the processing at step S1011.

Explanation returns to the processing at step S1006. The eight blocks adjacent to the macroblock under check are checked (step S1006). Whether the macroblock type of a checked adjacent block is 16x16 and whether the macroblock type is a skip block is determined (step S1007). Whether the reference frame of the adjacent block under check is at most one frame before is determined (step S1008).

If both conditions are satisfied at steps S1007 and S1008, i.e., the macroblock type of the checked adjacent block is determined to be 16x16 or a skip block type, and the reference frame is at most one frame before (steps S1007, S1008: YES), the flow proceeds to step S1009, and it is determined whether other adjacent blocks satisfy the same conditions (step S1009: NO).

If even one of the conditions at steps S1007 and S1008 is not satisfied (steps S1007 or S1008: NO), the motion vector of the macroblock under check is not suitable for interpolation frame generation and thus, is not selected; and the flow proceeds to the processing at step S1011.

At step S1009, if checking of the adjacent block has been completed (step S1009: YES), the macroblock under check has adjacent blocks that also satisfy all of the conditions and thus, a valid flag is set for the state data of the macroblock (step S1010). In other words, the motion vector of a macroblock for which the valid flag is raised is a motion vector selected for use in generating an interpolation frame.

It is determined whether all of the macroblocks of the image frame under processing have been checked (step S1011). Here, if a macroblock that has not been checked remains (step S1011: NO), the flow returns to the processing at step S1003, and the processing is repeated to select another macroblock that satisfies the above conditions. When all of the macroblock have been checked (step S1011: YES), a series of the processing ends.

### (Selection of Macroblock According to Bit Rate)

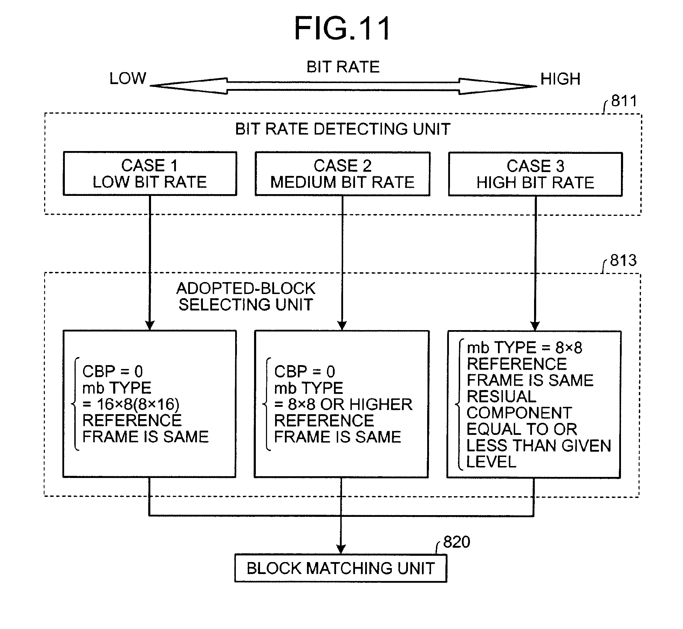

Changing of criteria for selecting a macroblock according to bit rate will be described. Fig. 11 is a schematic of one example of conditions for selecting a macroblock according to bit rate. Selection conditions depicted in Fig. 11 are but one example. As depicted in Fig. 11, the bit rate detecting unit 811, based on given criteria, discriminates, for example, three levels, low, medium, and high, with respect to the bit rate of received video data.

Selection conditions are set in the adopted-block selecting unit 813 for each level, case 1: low bit rate, case 2: medium bit rate, and case 3: high bit rate. According to the level determined and input by the bit rate detecting unit 811, block selection processing such as that depicted in Fig. 10 is executed using the set selection conditions. In this way, by changing the adoptable macroblock size the allowance for residual components, etc., based on bit rate variations, a more accurate motion vector can be selected.

As described, through the application of the image processing apparatus according to the present invention to the mobile terminal apparatus 700, an optimal interpolation frame can be generated using simple processing. Hence, even for video data having a low number of image frames such as one-seg broadcasts, the frame count per unit time can be increased enabling smooth video reproduction.

The image processing method described in the present embodiments may be implemented by a computer, such as a personal computer and a workstation, executing a program that is prepared in advance. The program is recorded on a computer-readable recording medium such as a hard disk, a flexible disk, a CD-ROM, an MO, and a DVD, and is executed by being read out from the recording medium by a computer. The program may be distributed through a network such as the Internet.

## Claims

1. An image processing apparatus that causes video to be displayed using consecutive image frames and a syntax element of each frame, comprising:
an extracting unit that refers to a motion vector included in a syntax element and extracts from among blocks partitioned in a frame, a block having a motion vector that is identical to motion vectors of adjacent blocks of a given number or more;
a determining unit that according to information included in the syntax element of the block extracted by the extracting unit, determines reliability of the motion vector of the block;
an adopting unit that regards the block as a block of focus when the reliability of the motion vector is determined to be high by the determining unit and adopts the motion vector of the block of focus as a motion vector to be used for interpolation frame generation.

2. The image processing apparatus according to claim 1, wherein
the determining unit determines the reliability of the motion vector to be high if a macroblock type of the syntax element of the extracted block is equal to or greater than a given size.

3. The image processing apparatus according to claim 1, wherein
the determining unit determines the reliability of the motion vector to be high if a difference value with respect to a reference frame is not included as the syntax element of the extracted block.

4. The image processing apparatus according to claim 1, wherein
the determining unit determines the reliability of the motion vector to be high if a given image frame that is in series with the image frame and at most a given number of frames away is set in a reference frame as the syntax element of the extracted block.

5. The image processing apparatus according to any one of claims 1 to 4 further comprising:
a selecting unit that, from among the blocks partitioned in the frame, selects a given block having a motion vector that is identical to the motion vector of the block of focus, wherein
the adopting unit adopts, as the motion vector to be used for interpolation frame generation, the motion vector of the given block selected by the selecting unit.

6. The image processing apparatus according to claim 5, wherein
the selecting unit excludes from selection, a block that is smaller than preliminarily set macroblock type.

7. The image processing apparatus according to claim 5, wherein
the selecting unit, from among blocks having a motion vector that is identical to the motion vector of the extracted block of focus, selects the given block where one or more blocks adjacent to the given block have a motion vector identical to the block of focus.

8. The image processing apparatus according to claim 5, wherein
the selecting unit selects from among blocks excluding blocks that have a difference with respect to the reference frame.

9. The image processing apparatus according to any one of claims 1 to 4 further comprising:
a detecting unit that detects bit rate at the time of acquisition of data of the frame, wherein
the determining unit, according to the bit rate detected by the detecting unit, changes a criterion for determining the reliability of the motion vector of the block.

10. An image processing apparatus that causes video to be displayed using consecutive image frames and a syntax element of each frame, comprising:
a selecting unit that selects from among blocks partitioned in a frame and based on a syntax element, a block that satisfies a given criterion;
an extracting unit that refers to a motion vector included in the syntax element and extracts from among blocks selected by the selecting unit, a block having a motion vector that is identical to motion vectors of adjacent blocks of a given number or more; and
an adopting unit that adopts, as a motion vector to be used for interpolation frame generation, the motion vector of the block extracted by the extracting unit.

11. An image processing method of causing video to be displayed using consecutive image frames and a syntax element of each frame, the image processing method comprising:
an extracting step of referring to a motion vector included in a syntax element and extracting from among blocks partitioned in a frame, a block having a motion vector that is identical to motion vectors of adjacent blocks of a given number or more;
a determining step of determining, according to information included in the syntax element of the block extracted at the extracting step, reliability of the motion vector of the block;
an adopting step of regarding the block as a block of focus when the reliability of the motion vector is determined to be high at the determining step and adopting the motion vector of the block of focus as a motion vector to be used for interpolation frame generation.

12. An image processing method causing video to be displayed using consecutive image frames and a syntax element of each frame, the image processing method comprising:
a selecting step of selecting from among blocks partitioned in a frame and based on a syntax element, a block that satisfies a given criterion;
an extracting step of referring to a motion vector included in the syntax element and extracting from among blocks selected at the selecting step, a block having a motion vector that is identical to motion vectors of adjacent blocks of a given number or more; and
an adopting step of adopting, as a motion vector to be used for interpolation frame generation, the motion vector of the block extracted at the extracting step.

13. An image processing program causing a computer to execute the image processing method according to claim 11 or 12.

14. A computer-readable recording medium storing therein the image processing program according to claim 13.
